# DEMANDE DE BREVET EUROPEEN

(11) **EP 1 388 463 A1**
(43) Date de publication de la demande: **11.02.2004**
(21) Numéro de dépôt: 03292003.5
(22) Date de dépôt: 21.07.2003
(51) Int. Cl.: B60Q 1/12, F21S 8/10, F21V 7/00

(54) **Projecteur d'éclairage elliptique convenant à la réalisation d'un faisceau de virage**

(30) Priorité: 05.08.2002 FR 0209964
(71) Demandeur: VALEO VISION, 93012 Bobigny Cédex (FR)
(72) Inventeur: Albou, Pierre, 75013 Paris (FR)

(57) **Abrégé**

L'invention propose un projecteur d'éclairage (10), comportant une source lumineuse (12), un réflecteur elliptique (14) et une lentille (18), qui sont agencés sur un axe optique (A-A). Le réflecteur (14) comporte une surface réfléchissante (20) constituée de plusieurs tranches verticales élémentaires (Tvᵢ). Chaque tranche verticale (Tvᵢ) comporte un foyer primaire (Fpᵢ) qui est confondu avec la source (12) et un foyer secondaire (Fsᵢ) qui constitue un point de convergence des rayons lumineux issus de la source (12). L'ensemble des foyers secondaires (Fsᵢ) définit une ligne dite des foyers secondaires (LFS).

Le projecteur (10) est caractérisé en ce que la position des foyers secondaires (Fsᵢ) sur la ligne des foyers secondaires (LFS) est choisie de sorte que, pour une distance (Di) croissante entre les tranches verticales (Tvᵢ) et le plan axial vertical (Pv), la distance latérale (Li) entre chaque foyer secondaire (Fsᵢ) et le plan axial vertical (Pv) est croissante puis décroissante au moins une fois, et en ce que la position des foyers secondaires (Fsᵢ) sur la ligne des foyers secondaires (LFS) est choisie de sorte que, pour une distance (Di) croissante entre les tranches verticales (Tvᵢ) et le plan axial vertical (Pv), la distance axiale (Xi) entre chaque foyer secondaire (Fsᵢ) et le plan focal (PF) de la lentille (18) est croissante puis décroissante au moins une fois.

## Description

La présente invention concerne un projecteur d'éclairage de véhicule automobile.

La présente invention concerne plus particulièrement un Projecteur d'éclairage de véhicule automobile, comportant une source lumineuse qui est agencée au voisinage du premier foyer d'un réflecteur du type elliptique, sur un axe optique sensiblement horizontal orienté de l'arrière vers l'avant, et une lentille convergente qui est placée en avant du réflecteur, du type dans lequel le réflecteur comporte une surface réfléchissante, agencée au voisinage de l'axe optique, comportant une pluralité de tranches verticales élémentaires, chaque tranche verticale élémentaire formant une section élémentaire d'ellipsoïde de révolution comportant au moins un foyer primaire qui est globalement confondu avec la source lumineuse et un foyer secondaire qui constitue un point de convergence des rayons lumineux issus de la source, après réflexion sur ladite tranche verticale, l'ensemble des foyers secondaires définissant une ligne dite des foyers secondaires, qui est située globalement dans un plan horizontal et à l'avant du plan focal de la lentille.

De nouvelles réglementations concernant les dispositifs d'éclairage de véhicule automobile sont actuellement mises en place. Ces nouvelles réglementations visent notamment à favoriser le développement de nouvelles fonctionnalités d'éclairage telles que l'éclairage additionnel en virage ou « Additional Bending Light ».

Il a été proposé de réaliser la fonction d'éclairage en virage au moyen d'un projecteur d'éclairage additionnel du type elliptique qui est monté pivotant sur le véhicule.

Des projecteur d'éclairage de véhicule du type elliptique sont déjà connus, notamment par les documents EP-A-0.628.765 et FR-A-2.773.604.

Plusieurs contraintes dictent la mise au point d'un tel projecteur elliptique pour réaliser un faisceau additionnel d'éclairage en virage, ou faisceau de virage.

L'encombrement du projecteur additionnel doit être le plus faible possible, d'autant que ce projecteur est prévu pour être monté pivotant sur le véhicule, de sorte que le volume réel nécessaire au projecteur additionnel correspond au volume balayé par le projecteur au cours de son pivotement.

Pour minimiser l'encombrement du projecteur additionnel, il est donc nécessaire que celui-ci ait un faible diamètre, par exemple un diamètre inférieur ou égal à cinquante millimètres pour la lentille, et une faible profondeur axiale.

Malgré le faible diamètre du projecteur, celui-ci doit produire un faisceau d'éclairage d'intensité lumineuse importante, par exemple supérieur ou égal à quinze mille Candelas.

Lorsque l'on réalise un faisceau de virage, on cherche à obtenir un faisceau qui forme, sur un écran de mesure placé à l'avant du véhicule, un rectangle comportant une coupure, du même type que pour un faisceau d'éclairage anti-brouillard.

Par rapport au faisceau anti-brouillard, on cherche à obtenir un faisceau d'intensité lumineuse supérieure et de largeur moins importante.

De plus, on souhaite que le projecteur additionnel réalise un apport visible pour le conducteur du véhicule dans le faisceau d'éclairage global, à l'avant du véhicule. En effet, l'apport en intensité lumineuse sur les côtés, par les projecteurs additionnels connus, n'est pas suffisant pour permettre au conducteur de déceler l'apport en éclairage provenant du projecteur de virage, par rapport à l'apport en éclairage provenant des projecteurs qui réalisent la fonction de faisceau de croisement. Ceci est d'autant plus marquant que les projecteurs additionnels de virage sont prévus pour être montés sur des véhicules déjà équipés de projecteur de croisement de puissance lumineuse importante.

Par conséquent, il est nécessaire que l'intensité lumineuse du faisceau de virage soit au moins égale à la moitié de l'intensité lumineuse maximale, lorsque l'on est décalé latéralement de dix degrés par rapport à l'axe optique du projecteur de virage.

D'autre part, compte tenu des faibles dimensions du projecteur de virage, l'encombrement de la source lumineuse, par exemple l'encombrement du globe de protection dans le cas d'une lampe à filament, est important par rapport à la taille du réflecteur. Par conséquent, une partie non négligeable des rayons lumineux émis par la source viennent impacter sur le globe après s'être réfléchis sur le réflecteur, ce qui entraîne des pertes importantes d'énergie lumineuse.

L'invention vise à répondre aux contraintes précitées et à remédier aux inconvénients des projecteurs connus, en proposant un projecteur d'éclairage simple, efficace, et économique.

Dans ce but, l'invention propose un projecteur d'éclairage du type décrit précédemment, caractérisé en ce que la position des foyers secondaires sur la ligne des foyers secondaires est choisie de sorte que, pour une distance croissante entre les tranches verticales et le plan axial vertical, la distance latérale entre chaque foyer secondaire et le plan axial vertical est croissante puis décroissante au moins une fois, de manière à répartir latéralement, par rapport au plan axial vertical, dans le plan focal de la lentille, les rayons lumineux qui se réfléchissent sur la surface réfléchissante au voisinage du plan axial vertical, et en ce que la position des foyers secondaires sur la ligne des foyers secondaires est choisie de sorte que, pour une distance croissante entre les tranches verticales et le plan axial vertical, la distance axiale entre chaque foyer secondaire et le plan focal de la lentille est croissante puis décroissante au moins une fois ;

Selon d'autres caractéristiques de l'invention :
- dans un demi-plan axial horizontal, le tronçon d'extrémité distale de la ligne des foyers secondaires, par rapport au plan axial vertical, est globalement confondu avec la courbe des foyers réels de la lentille, de manière que les foyers secondaires correspondant aux tranches verticales les plus éloignées du plan axial vertical soient agencés globalement dans une région focale de la lentille ;
- les tranches verticales d'au moins une partie de la surface réfléchissante comportent une portion d'extrémité supérieure qui réfléchit les rayons lumineux issus de la source vers un foyer secondaire auxiliaire situé entre le foyer secondaire associé et la lentille ;
- ledit plan axial vertical est un plan de symétrie du réflecteur ;
- le projecteur comporte un dispositif d'occultation qui est agencé au voisinage de la région focale de la lentille, de manière à réaliser une coupure dans le faisceau d'éclairage.

D'autres caractéristiques et avantages de l'invention apparaîtront à la lecture de la description détaillée qui suit pour la compréhension de laquelle on se reportera aux dessins annexés parmi lesquels :
- la figure 1 est une vue en coupe axiale horizontale qui représente schématiquement un projecteur d'éclairage qui est réalisé conformément aux enseignements de l'invention ;
- la figure 2 est une vue en coupe axiale verticale qui représente schématiquement le projecteur de la figure 1 ;
- la figure 3 est une vue similaire à celle de la figure 2 qui représente une variante de réalisation du projecteur de la figure 1.

Préliminairement, on notera que, d'une figure à l'autre, des éléments identiques ou similaires sont désignés dans la mesure du possible par les mêmes références.

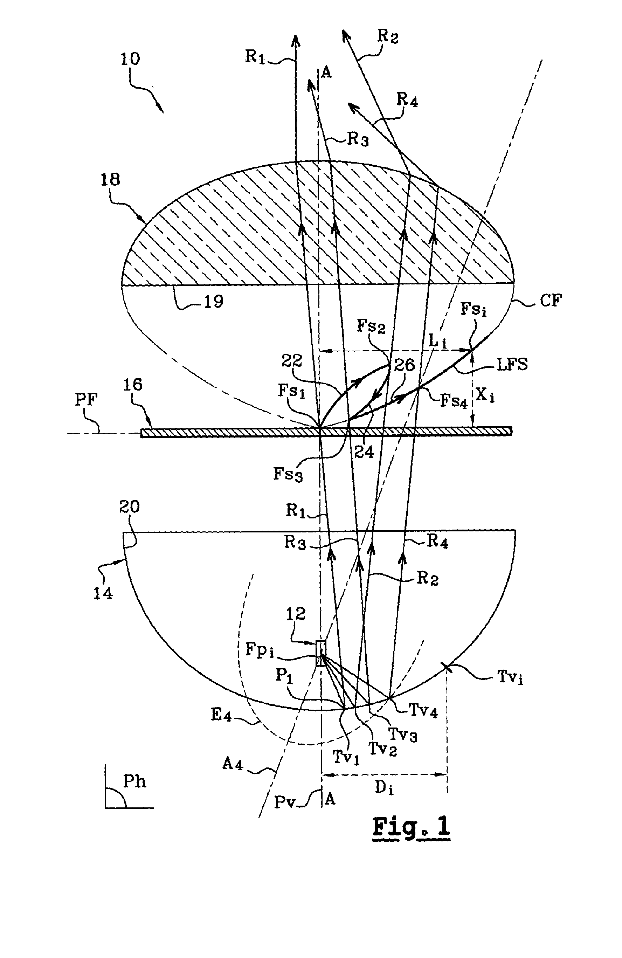

Sur la figure 1, on a représenté un projecteur d'éclairage 10 qui comprend une source lumineuse 12, telle que le filament d'une lampe à incandescence, un réflecteur 14 de récupération et de concentration du flux lumineux émis par la source 12, un masque, ou cache 16, placé dans une position déterminée en avant du réflecteur 14, et destiné à former, par occultation d'une partie du rayonnement incident, une image lumineuse de forme et de répartition lumineuse déterminées, convenant à un faisceau de virage, une lentille convergente 18, par exemple une lentille plan-convexe, dont le plan focal PF est situé au niveau du cache 16.

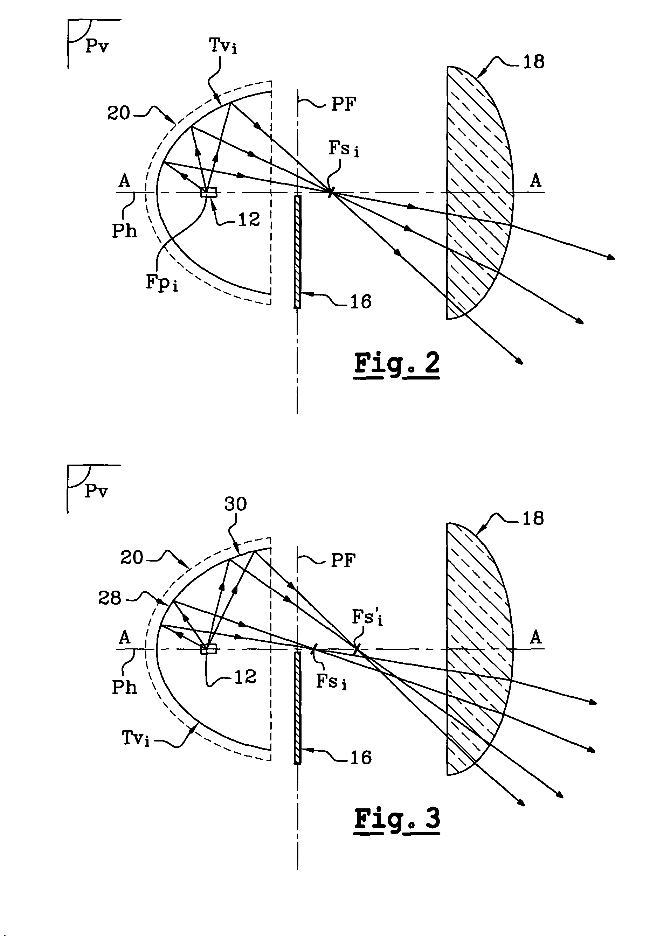

Dans la suite de la description, on utilisera à titre non limitatif une orientation d'arrière en avant, suivant un axe optique horizontal A-A du projecteur 10, qui correspond à une orientation de bas en haut en considérant la figure 1, et de gauche à droite en considérant la figure 2.

Le réflecteur 14 est du genre ellipsoïdal et il est réalisé conformément aux enseignements du document EP-A-0.628.765, auquel on pourra se reporter pour plus de précisions.

Le réflecteur 14 comporte donc une surface réfléchissante 20 telle que la position du point de convergence du rayonnement lumineux issu de la source 12, en projection dans un plan horizontal, c'est à dire la position du point qui correspond au deuxième foyer d'un ellipsoïde, varie à mesure que l'on s'écarte latéralement de l'axe optique A-A du projecteur 10.

La source lumineuse 12 est agencée globalement au premier foyer de l'ellipsoïde.

Conformément aux enseignements de l'invention, la surface réfléchissante 20 peut être définie par une pluralité de tranches ou sections verticales Tvᵢ élémentaires.

Chaque tranche verticale Tvᵢ, telle que celle qui est représentée sur la figure 2, est une section élémentaire d'ellipsoïde de révolution ayant pour foyer primaire Fpi le point où est agencé la source lumineuse 12, et ayant pour foyer secondaire Fsᵢ un point qui est situé en avant du plan focal PF de la lentille 18, dans un plan axial horizontal Ph.

Ainsi, le foyer secondaire Fsᵢ représente un point de convergence des rayons lumineux Ri qui sont émis par la source 12 et qui se réfléchissent sur la tranche verticale Tvᵢ de la surface réfléchissante 20.

Sur la figure 1, à titre d'exemple, on a représenté le trajet de quatre rayons lumineux R1, R2, R3, R4, qui sont contenus dans le plan axial horizontal Ph, qui se réfléchissent respectivement sur les tranches verticales T1, T2, T3, T4 de la surface réfléchissante 20, et qui passent respectivement par les foyers secondaires Fs₁, Fs₂, Fs₃, Fs₄.

A titre d'exemple, on a représenté partiellement en trait interrompu le profil de l'ellipse E4 qui correspond à la tranche verticale Tv₄. L'axe optique A4 de l'ellipse E4 est défini par la source lumineuse 12 et le foyer secondaire Fs₄.

L'ensemble des foyers secondaires Fsᵢ associés à chaque tranche verticale Tvᵢ élémentaire définit une ligne dite des foyers secondaires LFS, qui est située ici dans le plan axial horizontal, à l'avant du plan focal PF de la lentille 18.

On construit la ligne des foyers secondaires LFS en joignant deux à deux les foyers secondaires Fsᵢ correspondant à deux tranches verticales Tvᵢ adjacentes.

En choisissant judicieusement les caractéristiques de réflexion de chaque tranche verticale Tvᵢ de la surface réfléchissante 20, il est possible de choisir la position des foyers secondaires Fsᵢ sur la ligne des foyers secondaires LFS.

La position des foyers secondaires Fsᵢ sur la ligne des foyers secondaires LFS détermine les caractéristiques de l'image qui est formée par le réflecteur 14 dans le plan focal PF de la lentille 18, ce qui détermine donc l'image qui est projetée par la lentille 18 à l'avant du projecteur 10.

Conformément aux enseignements de l'invention, la position des foyers secondaires Fsᵢ sur la ligne des foyers secondaires LFS est choisie de sorte que, pour une distance Di croissante entre les tranches verticales Tvᵢ et le plan axial vertical Pv, la distance latérale Li entre chaque foyer secondaire Fsᵢ et le plan axial vertical Pv est croissante puis décroissante au moins une fois.

Avantageusement, la position des foyers secondaires Fsᵢ sur la ligne des foyers secondaires LFS est choisie aussi de sorte que, pour une distance Di croissante entre les tranches verticales Tvᵢ et le plan axial vertical Pv, la distance axiale Xi entre chaque foyer secondaire Fsᵢ et le plan focal PF est croissante puis décroissante au moins une fois.

Sur la figure 1, on a représenté une portion de la ligne des foyers secondaires LFS qui est associée à la portion de surface réfléchissante 20 située à droite du plan axial vertical Pv.

Selon le mode de réalisation représenté ici, le plan axial vertical Pv est un plan de symétrie du projecteur 10, de sorte qu'on décrira la structure et le fonctionnement du projecteur 10 uniquement pour sa partie latérale droite, par rapport au plan axial vertical Pv.

La portion latérale droite de la ligne des foyers secondaires LFS comporte ici ;
- un premier tronçon 22 en arc de cercle qui est borné par les foyers secondaires Fs₁ et Fs₂ ;
- un deuxième tronçon 24 en arc de cercle qui est borné par les foyers secondaires Fs₂ et Fs₃ ;
- un troisième tronçon 26 en arc de cercle qui est borné à gauche par le foyer secondaire Fs₃ et qui s'étend vers la droite le long de la courbe CF des foyers réels de la lentille 18.

Le foyer secondaire Fs₄ est situé sur le troisième tronçon 26 de la ligne LFS.

On note que les tronçons 22, 24, 26 peuvent avoir une forme différente de l'arc de cercle.

Conformément aux caractéristiques de construction de la ligne des foyers secondaires LFS, on constate que les foyers secondaires Fsᵢ situés sur le premier tronçon 22 correspondent aux tranches verticales Tvᵢ comprises entre la première tranche Tv₁ et la deuxième tranche Tv₂.

En parcourant la surface réfléchissante 20, depuis la première tranche Tv₁ jusqu'à la deuxième tranche Tv₂, on constate que la distance Di est croissante, et que, parallèlement, la distance latérale Li est croissante.

En particulier, le premier foyer secondaire Fs₁ est situé globalement dans le plan axial vertical Pv, donc à une distance latérale L1 égale à zéro, et le second foyer secondaire Fs₂ est situé à une distance latérale L2 supérieure à zéro.

Le premier tronçon 22 est agencé en avant du plan focal PF et en avant de la courbe des foyers réels CF, de sorte que pour chaque foyer secondaire Fsᵢ de ce tronçon 22, parallèlement à l'augmentation de la valeur de la distance latérale Li, entre Fs₁ et Fs₂, la distance axiale Xi est croissante.

En parcourant la surface réfléchissante 20, depuis la deuxième tranche Tv₂ jusqu'à la troisième tranche Tv₃, on constate que la distance Di est croissante, et que, parallèlement, la distance latérale Li est décroissante.

En effet, le troisième foyer secondaire Fs₃ est situé à une distance latérale L3 qui est inférieure à la distance latérale L2.

Pour les foyers secondaires Fsᵢ appartenant au deuxième tronçon 24, parallèlement à la décroissance de la distance latérale Li, on constate que la distance axiale Xi est aussi décroissante, jusqu'au troisième foyer secondaire Fs₃.

En parcourant la surface réfléchissante 20 vers la droite, depuis la troisième tranche verticale Tv₃, on constate que, pour les foyers secondaires Fsᵢ correspondants sur le troisième tronçon 26 de la ligne des foyers secondaires LFS, la distance Di est croissante, et que, parallèlement, la distance latérale Li est de nouveau croissante.

Par exemple, le quatrième foyer secondaire Fs₄ est situé à une distance latérale L4 qui est supérieure à la distance latérale L3.

Sur le troisième tronçon 26, la distance axiale Xi des foyers secondaires Fsᵢ est de nouveau croissante.

Les rayons lumineux Ri qui sont associés au premier tronçon 22 de la ligne des foyers secondaires LFS proviennent des tranches verticales Tvᵢ les plus proches du plan axial vertical Pv.

Or, les images de la source lumineuse 12 qui sont réfléchies par les portions de surface réfléchissante 20 les plus proches de l'axe optique A-A du projecteur 10 sont de tailles supérieures aux images qui sont réfléchies par les portions de surface réfléchissante 20 les plus éloignées de l'axe optique A-A.

Ainsi, l'image de la source lumineuse 12 réfléchie par une portion de la première tranche verticale Tvᵢ, qui est voisine du plan axial vertical Pv, a une taille plus importante que l'image de la source lumineuse 12 réfléchie par une portion de la deuxième tranche verticale Tv₂, qui est plus éloignée du plan axial vertical Pv.

Par conséquent, en choisissant que la distance latérale Li soit croissante sur le premier tronçon 22 de la ligne des foyers secondaires LFS, on provoque progressivement une déviation des rayons lumineux Ri vers la droite de la lentille 18, par rapport aux rayons lumineux qui seraient réfléchis par une surface réfléchissante de forme elliptique simple, ce qui permet de décaler vers la gauche, à la sortie de la lentille convergente 18, les « grandes images » de la source lumineuse 12.

De plus, la position des foyers secondaires FSᵢ sur le premier tronçon 22 est choisie de manière qu'au moins une partie des rayons lumineux Ri soit émise vers la partie latérale droite de la face d'entrée 19, ou face arrière, de la lentille 18, selon des directions divergentes par rapport au plan axial vertical Pv, ce qui permet d'obtenir, à la sortie de la lentille convergente 18, une déviation importante de ces rayons lumineux Ri vers la gauche du plan axial vertical Pv.

Par exemple, sur la figure 1, on constate que le rayon R1 est émis vers la partie latérale gauche de la face d'entrée 19 de la lentille 18, de sorte qu'il est ensuite dévié par la lentille 18 vers la droite, alors que, au contraire, le rayon R2 est émis vers la partie latérale droite de la lentille 18, suivant une direction divergente par rapport au plan axial vertical Pv, de sorte qu'il est ensuite dévié par la lentille 18, de manière importante, vers la gauche.

Plus les rayons lumineux Ri sont décalés vers la droite de la face d'entrée 19 de la lentille 18, plus ils sont déviés vers la gauche en sortant à l'avant de la lentille 18.

En choisissant que la distance latérale Li soit décroissante sur le deuxième tronçon 24 de la ligne des foyers secondaires LFS, on provoque progressivement une déviation des rayons lumineux Ri vers la gauche, par rapport aux rayons lumineux Ri du premier tronçon 22, ce qui permet de « ramener » les « grandes images » de la source lumineuse 12 vers le centre de la surface d'entrée 19 et vers le centre du faisceau d'éclairage.

Ainsi, on parvient à répartir latéralement les « grandes images » de la source lumineuse sans diminuer de manière trop importante l'intensité lumineuse émise dans l'axe A-A, puisqu'une partie des « grandes images » sont émises globalement dans l'axe A-A du projecteur 10.

Avantageusement, selon le mode de réalisation représenté ici, les deux premiers tronçons 22, 24 de la ligne des foyers secondaires LFS sont agencés à l'avant du plan focal PF de la lentille 18 et à l'avant de la courbe des foyers réels CF, c'est à dire que les images de la source lumineuse 12 correspondant à ces deux tronçons 22, 24 ne sont pas focalisées par rapport à la lentille 18.

Cette caractéristique permet d'éviter des pertes importantes d'énergie lumineuse, lorsque l'on envoie les « grandes images » de la source lumineuse 12 vers un côté, ici vers la droite, de la lentille 18. En effet, si les « grandes images » étaient focalisées, celles qui sont émises le plus à droite de la lentille 18 déborderaient partiellement en dehors de la face d'entrée 19 de la lentille 18. Une partie des rayons lumineux Ri ne serait donc pas exploitée par la lentille 18.

Cette donnée est particulièrement importante dans le cas d'une source lumineuse cylindrique disposée sur l'axe optique A-A, telle que par exemple le filament d'une lampe à incandescence, dont l'image réfléchie est globalement de forme rectangulaire. En effet, un rectangle projeté vers un côté de la face d'entrée 19, qui est ici circulaire, tend à « déborder » à l'extérieur de la face d'entrée 19.

Avantageusement, le troisième tronçon 26 de la ligne des foyers secondaires LFS suit la courbe des foyers réels CF, de sorte que les rayons lumineux Ri correspondants, tel que le rayon R4, sont focalisés par rapport à la lentille 18.

La focalisation des rayons lumineux Ri correspondant au troisième tronçon 26, surtout pour la première partie du tronçon 26, adjacente au tronçon 24, est utile pour obtenir des images de tailles moyennes bien focalisées sous la coupure. Cela permet d'élargir latéralement le faisceau d'éclairage, à l'avant du projecteur 10, suffisamment pour obtenir une intensité lumineuse proche de cinquante pourcents de l'intensité maximale, à une distance latérale déterminée par rapport à l'axe A-A.

On note que la surface réfléchissante 20 du projecteur 10 selon l'invention transmet les rayons lumineux Ri, qui se réfléchissent à droite sur la surface réfléchissante 20 au voisinage de l'axe optique A-A, vers une partie latérale droite de la lentille 18, ce qui permet à ces rayons lumineux Ri d'éviter la source lumineuse 12 après s'être réfléchis.

En effet, dans le cas d'un projecteur elliptique classique, une partie non négligeable des rayons lumineux, qui se réfléchissent sur la surface réfléchissante du projecteur au voisinage de l'axe optique A-A, sont interceptés par la source lumineuse et sont perdus avant d'atteindre la lentille.

Le faisceau d'éclairage réalisé par le projecteur selon le mode de réalisation représenté ici est parfaitement adapté à une fonction d'éclairage en virage. En effet, il permet d'obtenir, sur un écran de mesure placé à l'avant du projecteur, un faisceau d'éclairage de forme globalement rectangulaire, qui présente une répartition adéquate de l'intensité lumineuse sur les côtés.

Selon une variante de réalisation (non représentée) de l'invention, on peut choisir la position des foyers secondaires Fsᵢ de manière que la distance latérale Li et/ou la distance axiale Xi soit plusieurs fois croissante et décroissante, pour une distance Di croissante.

Selon une variante de réalisation, qui est représentée sur la figure 3, conformément aux enseignements du document FR-A-2.773.604 (voir notamment la description de la figure 3 de ce document), chaque tranche verticale Tvᵢ peut comporter plusieurs portions qui sont prévues pour focaliser le rayonnement issus de la source 12 respectivement en plusieurs foyers secondaires Fs.

Ainsi, comme on peut le voir sur la figure 3, chaque tranche verticale Tvᵢ de la surface réfléchissante 20 comporte une portion principale 28, adjacente à l'axe optique A-A, qui focalise les rayons issus de la source 12 sur un foyer secondaire principal Fsᵢ, et une portion périphérique supérieure 30, qui focalise les rayons issus de la source 12 sur un foyer secondaire auxiliaire Fsᵢ', qui est situé entre le foyer secondaire principal Fsᵢ et la lentille 18.

Cette caractéristique des tranches verticales Tvᵢ permet d'épaissir verticalement la tache lumineuse produite par la source 12 et la surface réfléchissante 20 dans le plan du cache 16, ici le plan focal PF de la lentille 18. Cet épaississement de la tache lumineuse provoque un épaississement vertical proportionnel du faisceau d'éclairage réalisé par le projecteur 10.

Bien entendu, chaque tranche verticale Tvᵢ peut comporter plus de deux portions 28, 30.

Pour faciliter la compréhension de l'invention, on a représenté sur les figures une surface réfléchissante 20 qui comporte un seul foyer primaire Fpᵢ.

De préférence, en vue d'optimiser les caractéristiques de répartition lumineuse du faisceau d'éclairage, la portion principale 28 de chaque tranche verticale Tvᵢ comporte plusieurs foyers primaires Fpᵢ qui sont agencés globalement le long de la source lumineuse 12.

Chaque tranche verticale Tvᵢ comporte, par exemple, un foyer primaire Fpᵢ haut, qui est associé à la partie haute de la portion principale 28, située au-dessus de l'axe A-A, et un foyer primaire Fpᵢ bas, qui est associé à la partie basse de la portion principale 28, située au-dessous de l'axe A-A.

Les portions d'ellipse correspondant à chaque foyer primaire Fpᵢ sont raccordées entre elles sans former de décrochement ou d'arête.

Les foyers primaires Fpᵢ haut et bas sont agencés, par exemple, à chacune des extrémités axiales de la source lumineuse 12.

Avantageusement, selon une variante de réalisation (non représentée), le cache 16 peut être courbé de manière que son profil, en section horizontale, corresponde au profil de la courbe des foyers réels et qu'il soit confondu avec celle-ci.

Cette caractéristique permet notamment d'améliorer la netteté de la coupure réalisée dans le faisceau d'éclairage du projecteur 10.

## Revendications

1. Projecteur d'éclairage (10) de véhicule automobile, comportant une source lumineuse (12) qui est agencée au voisinage du premier foyer d'un réflecteur (14) du type elliptique, sur un axe optique (A-A) sensiblement horizontal orienté de l'arrière vers l'avant, et une lentille convergente (18) qui est placée en avant du réflecteur (14), du type dans lequel le réflecteur (14) comporte une surface réfléchissante (20), agencée au voisinage de l'axe optique (A-A), comportant plusieurs tranches verticales élémentaires (Tvᵢ), chaque tranche verticale élémentaire (Tvᵢ) formant une section élémentaire d'ellipsoïde de révolution comportant au moins un foyer primaire (Fpᵢ) qui est globalement confondu avec la source lumineuse (12) et un foyer secondaire (Fsᵢ) qui constitue un point de convergence des rayons lumineux (Ri) issus de la source (12), après réflexion sur ladite tranche verticale (Tvᵢ), l'ensemble des foyers secondaires (Fsᵢ) définissant une ligne dite des foyers secondaires (LFS), qui est située globalement dans un plan horizontal (Ph) et à l'avant du plan focal (PF) de la lentille (18),
**caractérisé en ce que** la position des foyers secondaires (Psᵢ) sur la ligne des foyers secondaires (LFS) est choisie de sorte que, pour une distance (Di) croissante entre les tranches verticales (Tvᵢ) et le plan axial vertical (Pv), la distance latérale (Li) entre chaque foyer secondaire (Fsᵢ) et le plan axial vertical (Pv) est croissante puis décroissante au moins une fois, de manière à répartir latéralement, par rapport au plan axial vertical (Pv), dans le plan focal (PF) de la lentille (18), les rayons lumineux (Ri) qui se réfléchissent sur la surface réfléchissante (20) au voisinage du plan axial vertical (Pv),
et **en ce que** la position des foyers secondaires (Fsᵢ) sur la ligne des foyers secondaires (LFS) est choisie de sorte que, pour une distance (Di) croissante entre les tranches verticales (Tvᵢ) et le plan axial vertical (Pv), la distance axiale (Xi) entre chaque foyer secondaire (Fsᵢ) et ie plan focal (PF) de la lentille (18) est croissante puis décroissante au moins une fois.

2. Projecteur (10) selon la revendication précédente, **caractérisé en ce que**, dans un demi-plan axial horizontal, le tronçon d'extrémité distale (26) de la ligne des foyers secondaires (LFS), par rapport au plan axial vertical (Pv), est globalement confondu avec la courbe des foyers réels (CF) de la lentille (18), de manière que les foyers secondaires (Fsᵢ) correspondant aux tranches verticales (Tvᵢ) les plus éloignées du plan axial vertical (Pv) soient agencés globalement dans une région focale (CF) de la lentille (18).

3. Projecteur (10) selon l'une quelconque des revendications précédentes, **caractérisé en ce que** les tranches verticales (Tvᵢ) d'au moins une partie de la surface réfléchissante (20) comportent une portion d'extrémité supérieure (30) qui réfléchit les rayons lumineux (Ri) issus de la source (12) vers un foyer secondaire auxiliaire (Fsᵢ') situé entre le foyer secondaire associé (Fsᵢ) et la lentille (18).

4. Projecteur (10) selon l'une quelconque des revendications précédentes, **caractérisé en ce que** ledit plan axial vertical (Pv) est un plan de symétrie du réflecteur (14).

5. Projecteur (10) selon l'une quelconque des revendications précédentes, **caractérisé en ce qu'**il comporte un dispositif d'occultation (16) qui est agencé au voisinage de la région focale (CF) de la lentille (18), de manière à réaliser une coupure dans le faisceau d'éclairage.
